# EUROPEAN PATENT APPLICATION

(11) **EP 4 626 105 A1**
(43) Date of publication of application: **01.10.2025**
(21) Application number: 24738704.6
(22) Date of filing: 03.01.2024
(51) Int. Cl.: H04W 72/04, H04W 72/27, H04W 72/51, H04W 72/542, H04W 74/08

(54) **METHOD AND DEVICE RELATING TO RANDOM-ACCESS CONFIGURATION IN CONSIDERATION OF MULTIPLE SEPARATED UPLINK NODES**

(30) Priority: 05.01.2023 KR 20230001894
(71) Applicant: Samsung Electronics Co., Ltd., Suwon-si, Gyeonggi-do 16677 (KR)
(72) Inventor: SONG, Sooeun, Suwon-si, Gyeonggi-do 16677 (KR); KIM, Suhwook, Suwon-si, Gyeonggi-do 16677 (KR); LEE, Deokhui, Suwon-si, Gyeonggi-do 16677 (KR); LEE, Sangho, Suwon-si, Gyeonggi-do 16677 (KR); YI, Jaehong, Suwon-si, Gyeonggi-do 16677 (KR); LEE, Changsung, Suwon-si, Gyeonggi-do 16677 (KR)
(74) Representative: Nederlandsch Octrooibureau
(86) International application number: PCT/KR2024/000111
(87) International publication number: WO 2024/147634

(57) **Abstract**

The disclosure relates to a 5G or 6G communication system for supporting a higher data transmission rate. A method performed by a gNB in a wireless communication system according to the present disclosure may comprise the steps of: transmitting, to multiple uplink dedicated nodes, request messages for requesting uplink transmission; receiving response messages from the multiple uplink dedicated nodes; generating system information on the basis of the response messages; transmitting the generated system information to a UE; receiving, from the multiple uplink nodes, information related to uplink data from the UE; and selecting an uplink node to be uplink-connected to the UE among the multiple uplink nodes.

## Description

### [Technical Field]

The disclosure relates to a wireless communication system, and more particularly, to a method and device for performing a random access procedure in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies..

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Looking back at the development process of wireless communication generations, technologies have been developed primarily for human-targeted services such as voice, multimedia, and data. After the commercialization of 5th-generation (5G) communication systems, it is expected that connected devices in an explosive increase trend will be connected to communication networks. Examples of objects connected to the network may include vehicles, robots, drones, home appliances, displays, smart sensors installed in various infrastructures, construction machinery, and factory equipment. It is expected that mobile devices will be evolved into various form factors such as augmented reality glasses, virtual reality headsets, and hologram devices. In the 6th-generation (6G) era, in order to provide various services by connecting hundreds of billions of devices and objects, efforts are being made to develop an improved 6G communication system. For this reason, the 6G communication system is referred to as a beyond 5G communication.

In the 6G communication system expected to be realized around 2030, the maximum transmission speed is tera (i.e., 1,000 gigabytes) bps, and a wireless delay time is 100 microseconds (µsec). That is, a transmission speed in the 6G communication system is 50 times faster than that of the 5G communication system and a wireless delay time thereof is reduced to 1/10 compared to that of 5G mobile communication technology.

To achieve such high data rates and ultra-low latency, the 6G communication system is being considered to implement in a terahertz band (e.g., 95 gigahertz (95 GHz) to 3 terahertz (3 THz) band). In the terahertz band, it is expected that the importance of technology that may ensure signal reach, that is, coverage, will increase due to a more serious path loss and atmospheric absorption phenomenon compared to a mmWave band introduced in 5G.

### [Disclosure of Invention]

### [Technical Problem]

With the development of mobile communication systems, it has become possible to utilize various frequency bands, and a bottleneck phenomenon may occur in coverage due to a path loss in a high frequency band and limited terminal power, and a method for solving this is required.

### [Solution to Problem]

According to the disclosure for solving the above problems, a method performed by a base station in a wireless communication system may include transmitting, to a plurality of uplink nodes, a request message requesting uplink transmission; receiving, from the plurality of uplink nodes, a response message; generating system information based on the response message; transmitting, to a user equipment (UE), the generated system information; receiving, from the plurality of uplink nodes, information related to uplink data from the UE; and selecting an uplink node to connect uplink data from the UE among the plurality of uplink nodes based on the information.

In an embodiment, the request message may include at least one of a synchronization signal block (SSB), information indicating whether a decoupling band is shared between the plurality of uplink nodes, or information on a decoupling band already being used by other uplink nodes

In an embodiment, the response message may include at least one of information on PRACH resources allocated by the plurality of uplink nodes or information on a PRACH occasion configuration.

In an embodiment, the method further may include transmitting, to the plurality of uplink nodes, a request message for interface connection; and receiving, from the plurality of uplink nodes, a response message for the interface connection.

In an embodiment, the request message for the interface connection may include at least one of information on a downlink/uplink cell provided by the base station, information indicating whether downlink/uplink decoupling (DUDe) is possible, or information on a provided DUDe frequency band.

In an embodiment, the method may further include receiving, from the plurality of uplink nodes, a message including at least one of information on an SSB index corresponding to a preamble received from the UE, reception power of the preamble, a random access preamble ID (RAPID), a calculated random access-radio network temporary identifier (RA-RNTI), or a medium access control random access response (MAC RAR).

Further, in another embodiment of the disclosure, a method performed by an uplink node in a wireless communication system may include receiving, from a base station, a request message requesting uplink transmission; transmitting, to the base station, a response message; and transmitting, to the base station, information related to uplink data from a user equipment (UE), wherein system information may be generated based on the response message and transmitted to the UE, and an uplink node to connect uplink data from the UE among a plurality of uplink nodes may be selected based on the uplink data and information.

Further, in another embodiment of the disclosure, a base station may include a transceiver capable of transmitting and receiving at least one signal; and a controller coupled to the transceiver, wherein the controller may be configured to transmit, to a plurality of uplink nodes, a request message requesting uplink transmission, to receive, from the plurality of uplink nodes, a response message, to generate system information based on the response message, to transmit, to user equipment (UE), the generated system information, to receive, from the plurality of uplink nodes, information related to uplink data from the UE, and to select an uplink node to connect uplink data from the UE among the plurality of uplink nodes based on the information.

Further, in another embodiment of the disclosure, an uplink node may include a transceiver capable of transmitting and receiving at least one signal; and a controller coupled to the transceiver, wherein the controller may be configured to receive, from a base station, a request message requesting uplink transmission, to transmit, to the base station, a response message, and to transmit, to the base station, information related to uplink data from a user equipment (UE), wherein system information may be generated based on the response message and transmitted to the UE, and an uplink node to connect uplink data from the UE among a plurality of uplink nodes may be selected based on the uplink data and information.

In various embodiments of the disclosure, a method performed by a gNB when a frequency band for downlink/uplink decoupling (DUDe) between a plurality of uplink nodes is not shared in a wireless communication system may include transmitting, to a plurality of uplink nodes, a request message requesting uplink transmission; receiving a response message from the plurality of uplink nodes; generating system information based on the response message; transmitting the generated system information to a UE; receiving, from the plurality of uplink nodes, information related to uplink data from the UE; and selecting an uplink node to connect uplink data from the UE among the plurality of uplink nodes.

Additionally, the request message may include a synchronization signal block (SSB), information indicating that a decoupling band is not to be shared among the plurality of uplink nodes, and information on a decoupling band already being used by other uplink nodes, wherein the response message may include at least one of information on PRACH resources allocated by the plurality of uplink nodes or information on a PRACH occasion configuration.

Additionally, the method may further include transmitting, to the plurality of uplink nodes, a request message for interface connection; and receiving, from the plurality of uplink nodes, a response message for the interface connection, wherein the request message for the interface connection may include information on a downlink/uplink cell provided by the gNB, information indicating whether downlink/uplink decoupling (DUDe) is possible, and information on a provided DUDe frequency band.

Additionally, the method may further include receiving, from the plurality of uplink nodes, a message including at least one of information on an SSB index corresponding to a preamble received from the UE, reception power of the preamble, a RAPID, a calculated random access-radio network temporary identifier (RA-RNTI), on a MAC RAR.

Additionally, the method may further include selecting, by the first node, an uplink node to connect uplink data from the UE based on the message received from the plurality of uplink nodes.

In various embodiments of the disclosure, a method performed by a gNB when sharing a frequency band for downlink/uplink decoupling (DUDe) between a plurality of uplink nodes in a wireless communication system may include transmitting, to one uplink node, a request message requesting uplink transmission; receiving a response message from the uplink node; identifying a PRACH occasion resource based on the response message; transmitting, to a plurality of uplink nodes, a request message requesting uplink transmission using the generated PRACH occasion information; receiving a response message from the uplink nodes; generating system information based on the response message; transmitting the generated system information to a UE; receiving, from the plurality of uplink nodes, information related to uplink data from the UE; and selecting an uplink node to connect uplink data from the UE among the plurality of uplink nodes.

Additionally, a request message requesting uplink transmission to the one uplink node may include a synchronization signal block (SSB), information indicating that a decoupling frequency band is to be shared among the plurality of uplink nodes, and information on the decoupling frequency band to be shared, wherein the response message may include at least one of information on PRACH resources allocated by the uplink node or information on a PRACH occasion configuration.

Additionally, a request message requesting uplink transmission to the plurality of uplink nodes may include at least one of the synchronization signal block (SSB), information indicating that a decoupling frequency band is to be shared among the plurality of uplink nodes, information on the decoupling frequency band to be shared, information on allocated PRACH resources received through a response message of the one uplink node, or information on the PRACH occasion configuration.

Additionally, the method may further include transmitting, to the plurality of uplink nodes, a request message for interface connection; and receiving, from the plurality of uplink nodes, a response message for the interface connection, wherein the request message for interface connection may include information on a downlink/uplink cell provided by the gNB, information indicating whether downlink/uplink decoupling (DUDe) is possible, and information on a provided DUDe frequency band.

Additionally, the method may further include receiving, from the plurality of uplink nodes, a message including at least one of information on an SSB index corresponding to a preamble received from the UE, reception power of the preamble, a RAPID, a calculated RA-RNTI, or a MAC RAR.

Additionally, the method may further include selecting, by the gNB, an uplink node to connect uplink data from the UE based on the message received from the plurality of uplink nodes.

In various embodiments of the disclosure, a gNB in a wireless communication system may include a transceiver; and at least one processor, wherein the at least one processor may be configured to transmit, to a plurality of uplink nodes, a request message requesting uplink transmission, to receive a response message from the uplink nodes, to generate system information based on the response message, to transmit the generated system information to a UE, to receive, from the uplink nodes, information related to uplink data from the UE, and to select an uplink node to perform uplink connection with the UE among the uplink nodes.

In various embodiments of the disclosure, a plurality of uplink nodes in a wireless communication system may include a transceiver; and at least one processor, wherein the at least one processor may be configured to receive, from a gNB, a request message requesting uplink transmission, to map a physical random access channel (PRACH) occasion for the gNB based on the request message, to receive, from the gNB, a response message including the PRACH occasion configuration information, to receive PRACH data from a UE based on the PRACH occasion, and to receive uplink data from the UE.

Technical problems to be achieved in the disclosure are not limited to the above-described technical problems, and other technical problems not described will be clearly understood by those of ordinary skill in the art to which the disclosure belongs from the description below.

### [Advantageous Effects of Invention]

According to various embodiments of the disclosure, wide coverage can be secured through decoupling of downlink and uplink.

According to various embodiments of the disclosure, communication capabilities can be improved and resource waste can be reduced by decoupling of downlink and uplink.

### [Brief Description of Drawings]

FIG. 1 is a message flow diagram illustrating a series of operations for performing a random access procedure according to an embodiment of the disclosure.
FIG. 2 is a message flow diagram illustrating a method of performing UL/DL decoupling according to an embodiment of the disclosure.
FIG. 3A is a message flow diagram illustrating a method of generating system information in order to perform DL/UL decoupling when UL nodes use different DUDe frequency bands according to various embodiments of the disclosure.
FIG. 3B is a diagram illustrating an example of a system information block determined according to the embodiment of FIG. 3A.
FIG. 4A is a message flow diagram illustrating a method of generating system information in order to perform DL/UL decoupling when UL nodes share and use a DUDe frequency band according to various embodiments of the disclosure.
FIG. 4B is a diagram illustrating an example of a system information block determined according to the embodiment of FIG. 4A.
FIG. 5 is a message flow diagram illustrating a method of performing preamble transmission and RAR reception when performing DL/UL decoupling according to an embodiment of the disclosure.
FIG. 6 is a message flow diagram illustrating a method of performing CR reception when performing DL/UL decoupling according to an embodiment of the disclosure.
FIG. 7 illustrates a flowchart according to an embodiment of the disclosure.
FIG. 8 is a block diagram illustrating a structure of a base station according to an embodiment of the disclosure.
FIG. 9 is a block diagram illustrating a structure of a network node according to an embodiment of the disclosure.

### [Mode for the Invention]

Hereinafter, preferred embodiments of the disclosure will be described in detail with reference to the attached drawings. In this case, it should be noted that in the attached drawings, identical components are indicated by identical symbols whenever possible. Further, detailed descriptions of well-known functions and constitutions that may obscure the gist of the disclosure will be omitted.

In describing embodiments in this specification, descriptions of technical contents that are well known in the technical field to which the disclosure pertains and that are not directly related to the disclosure will be omitted. This is to more clearly convey the gist of the disclosure without obscuring the gist of the disclosure by omitting unnecessary description.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only embodiments of the disclosure enable the disclosure to be complete, and are provided to fully inform the scope of the disclosure to those of ordinary skill in the art to which the disclosure belongs, and the disclosure is only defined by the scope of the claims. Like reference numerals refer to like components throughout the specification.

In this case, it will be understood that each block of message flow diagrams and combinations of the message flow diagrams may be performed by computer program instructions. Because these computer program instructions may be mounted in a processor of a general purpose computer, special purpose computer, or other programmable data processing equipment, the instructions performed by a processor of a computer or other programmable data processing equipment generate a means that performs functions described in the message flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the message flow diagram block(s). Because the computer program instructions may be mounted on a computer or other programmable data processing equipment, a series of operation steps are performed on the computer or other programmable data processing equipment to generate a computer-executable process; thus, instructions for performing the computer or other programmable data processing equipment may provide steps for performing functions described in the message flow diagram block(s).

Further, each block may represent a portion of a module, a segment, or a code including one or more executable instructions for executing a specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, the term '-unit' used in this embodiment means software or hardware components such as field programmable gate array (FPGA) or application specific integrated circuit (ASIC), and '-unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card.

Hereinafter, the base station is a subject performing resource allocation of the terminal and may be at least one of a node B, base station (BS), an eNode B (eNode B), a gNB (gNode B), a radio access unit, a base station controller, or a node on the network. The terminal may include a user equipment (UE), a mobile station (MS), a cellular phone, a smart phone, a computer, or a multimedia system capable of performing a communication function. Further, the embodiment of the disclosure may be applied to other communication systems having a similar technical background or channel type to the embodiment of the disclosure described below. Further, the embodiments of the disclosure may be applied to other communication systems through some modifications within a range that does not significantly depart from the scope of the disclosure by determination of a person having skilled technical knowledge.

Hereinafter, a term for identifying an access node, a term referring to a network entity or a network function (NF), a term referring to messages, a term referring to an interface between network objects, and terms referring to various identification information used in the description are exemplified for convenience of description. Accordingly, the disclosure is not limited to the terms described below, and other terms referring to an object having an equivalent technical meaning may be used.

Hereinafter, for convenience of description, some terms and names defined in the 3rd generation partnership project long term evolution (3GPP LTE) standard may be used. However, the disclosure is not limited by the above terms and names, and may be equally applied to systems conforming to other standards.

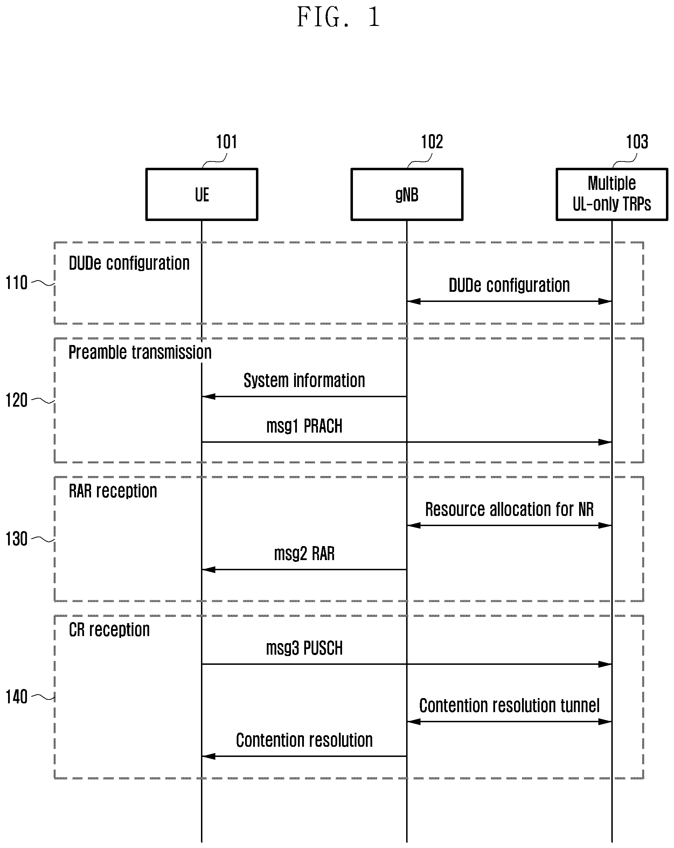

FIG. 1 is a message flow diagram illustrating a series of operations for performing a random access procedure according to an embodiment of the disclosure.

In a next generation communication system, in the case of using a relatively high frequency band, a bottleneck phenomenon may occur in coverage in the case of uplink transmission due to a high path loss and limited UE power. To solve this problem, a method of decoupling uplink transmission and downlink transmission and disposing a plurality of nodes in charge of uplink transmission is proposed.

Therefore, the disclosure proposes a method of performing a random access procedure using a plurality of uplink nodes in the case that a bottleneck phenomenon occurs in uplink coverage.

With reference to FIG. 1, a random access procedure according to an embodiment of the disclosure may be broadly divided into four steps. The random access procedure may include downlink uplink decoupling (DUDe) configuration step (step 110), preamble transmission step (step 120), random access response (RAR) reception step (step 130), and contention resolution (CR) reception step (step 140).

FIG. 1 illustrates communication of a UE (or terminal) 101, a gNB node 102 capable of performing both downlink and uplink, and an uplink node (UL node) 103 that performs only uplink. The DUDe configuration step (step 110) is step to be performed between the gNB 102 and the UL node 103 and includes step of performing a configuration. The preamble transmission step (step 120) includes step in which the gNB 102 transmits system information indicating that DUDe is applied to the UE 101 and in which the UE identifies PRACH occasion configuration information of the UL node based on the received system information and transmits a physical random access channel (PRACH) with communication among the gNB 102, the UE 101, and a plurality of UL nodes 103. The RAR reception step (step 130) includes step in which UL nodes that have received a PRACH perform resource allocation and in which the gNB 102 selects a UL node to perform uplink connection with the UE 101, and then transmits allocated resources of the selected UL node to the UE. The CR reception step (step 140) includes step in which, when the UE 101 allocated with resources performs a physical uplink shared channel (PUSCH) to the UL node 103, the UL node 103 communicates the received content with the gNB 102, and the gNB 102 transmits contention resolution to the UE 101 through a downlink channel.

Hereinafter, the drawings illustrate detailed operations included in each step of FIG. 1.

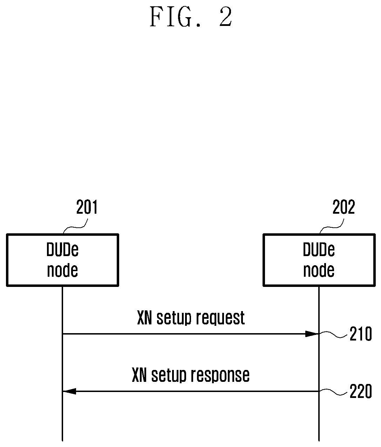

FIG. 2 is a message flow diagram illustrating a method of performing UL/DL decoupling according to an embodiment of the disclosure.

DUDe nodes 210 and 202 of FIG. 2 may be the UL node 103 or the gNB 102 illustrated in FIG. 1. The operations of FIG. 2 may be included in the DUDe configuration step (step 110) of FIG. 1.

In FIG. 2, in the case that a DUDe node performing communication with a UE identifies that a communication problem occurs or communication efficiency is reduced in uplink transmission or by determination of the DUDe node, the DUDe node may determine to perform DL/UL decoupling (DUDe).

According to an embodiment, the DUDe nodes 210 and 202 are configured as a first DUDe node 201 and a second DUDe node 202. The first DUDe node may perform XN interface setup with a node to request decoupling among at least one candidate DUDe node. In order to perform XN interface setup, the first DUDe node 201 may transmit an XN setup request message to the second DUDe node 202 (step 210). The XN setup request message may include information on a DL/UL cell list (e.g., list of served DL/UL cells IE) provided by the first DUDe node 201, information (DUDe information IE) for a DUDe configuration, and a list of provided DUDe frequency bands (e.g., supported DUDe band list IE). Information (DUDe information IE) for a DUDe configuration may include information indicating whether the corresponding node provides DUDe. When the second DUDe node 202 receives an XN setup request message, the second DUDe node 202 may determine whether it may provide DUDe by itself. In the case that DUDe is possible, the second DUDe node 202 may transmit an XN setup response message to the first DUDe node 201 (step 210). The XN setup response message may include information on a DL/UL cell list (e.g., list of served DL/UL cells IE) provided by the second DUDe node 202, information for DUDe configuration (DUDe information IE), and a list of provided DUDe frequency bands (e.g., supported DUDe band list IE).

According to an embodiment, information on whether DUDe is possible between the first DUDe node and the second DUDe node may be preconfigured. This may be configured by the operator and be configured by performing in advance communication. In this case, a synchronization signal block (SSB) of the first DUDe node may use the preconfigured PRACH occasion of the second DUDe node.

When the first DUDe node and the second DUDe node receive an XN setup request and response, they may be connected to the XN interface to perform communication.

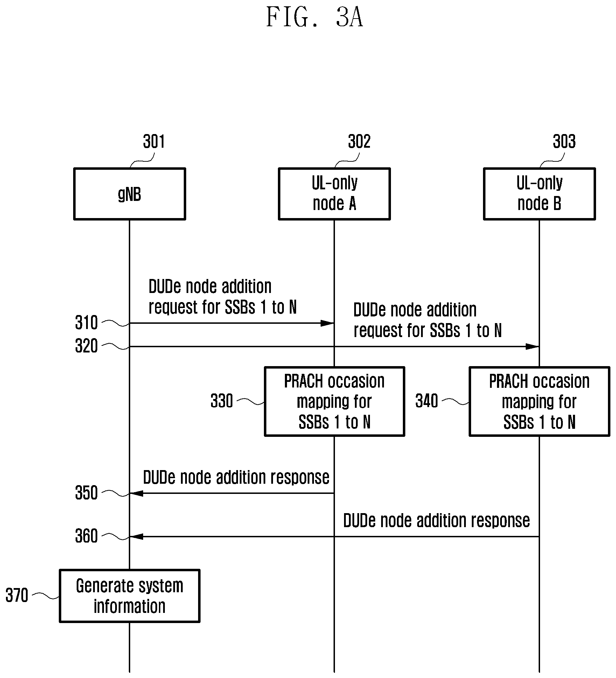

FIG. 3A is a message flow diagram illustrating a method of generating system information in order to perform DL/UL decoupling when UL nodes use different DUDe frequency bands according to various embodiments of the disclosure.

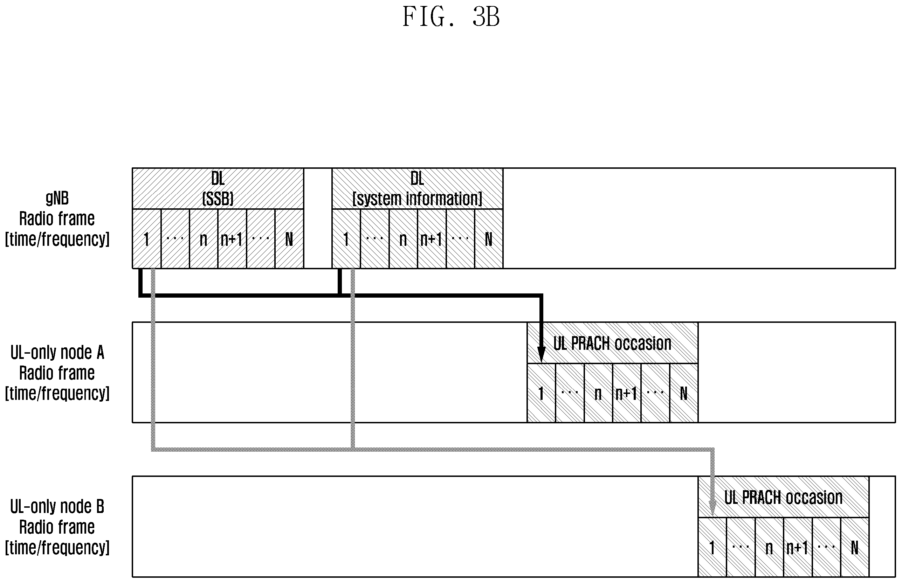

FIG. 3B is a diagram illustrating an example of a system information block determined according to the embodiment of FIG. 3A.

A DUDe node of FIG. 3A may be the gNB or UL nodes illustrated in FIG. 1. The operations of FIG. 3A may be included in the DUDe configuration step of FIG. 1. The operations of FIG. 3A may be performed after XN interface connection is set up through the operations of FIG. 2, or may be performed after identifying that the operations may be configured in advance and that DUDe may be provided to each other.

With reference to FIG. 3A, the gNB may have completed XN interface setup with a plurality of UL DUDe nodes. FIG. 3A illustrates an embodiment in which a gNB adds UL nodes using different frequency bands to perform DUDe.

According to an embodiment, a gNB 301 may select DUDe for each SSB based on received information (e.g., SSB, DUDe frequency band) of a plurality of UL DUDe nodes 302 and 303, and transmit a DUDe node addition request message to the plurality of UL DUDe nodes 302 and 303 to perform DUDe, including SSB information requiring PRACH occasion allocation, list information of DUDe frequency bands, and information indicating not to share the DUDe band (steps 310, 320). The DUDe node addition request message may include at least one of SSB information requiring PRACH occasion allocation, an indicator indicating whether a PRACH occasion is shared, a DUDe band list already being used, or a timestamp. The UL nodes 302 and 303 that have received a DUDe node addition request message may configure (or map) a PRACH occasion for an SSB (steps 330 and 340). When the UL node configures the PRACH occasion, the UL node may transmit a DUDe node addition response message including PRACH occasion configuration information to the gNB 301 (steps 350 and 360). The DUDe node addition response message may include at least one of PRACH occasion mapping information or a timestamp. The gNB 301 that has received the DUDe node addition response message may generate system information reflecting DL/UL decoupling based on the possibility of DL/UL decoupling (step 370). The system information may include an indicator for a plurality of ROs per SSB and common random access information, and the like.

For example, with reference to FIG. 3B, in transmitting downlink in a gNB radio frame, a PRACH occasion may be designated for SSB and system information 1 to N so that the same SSB and system information correspond to different UL nodes. 1 to N may be designated to radio frames 1 to N of an UL node A and radio frames 1 to N of an UL node B. In the case that the UE receives SSBs 1 to N based on the allocated PRACH occasion, the UE may transmit a PRACH to the UL node A and the UL node B using different frequency bands, respectively.

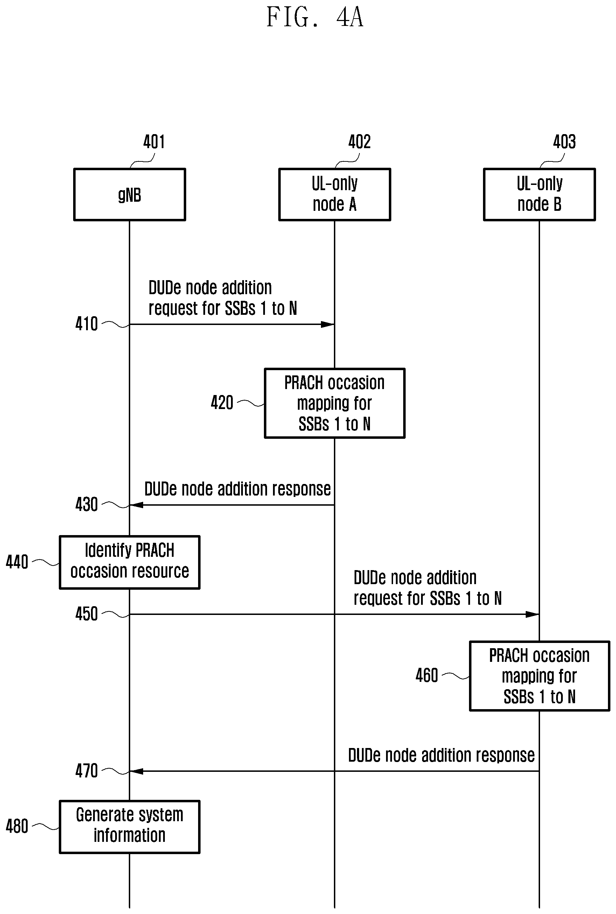

FIG. 4A is a message flow diagram illustrating a method of generating system information in order to perform DL/UL decoupling when UL nodes share and use a DUDe frequency band according to various embodiments of the disclosure.

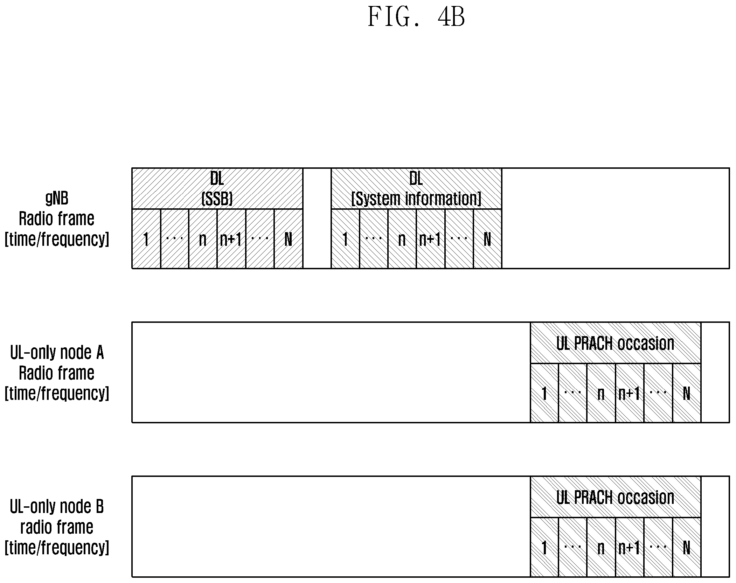

FIG. 4B is a diagram illustrating an example of a system information block determined according to the embodiment of FIG. 4A.

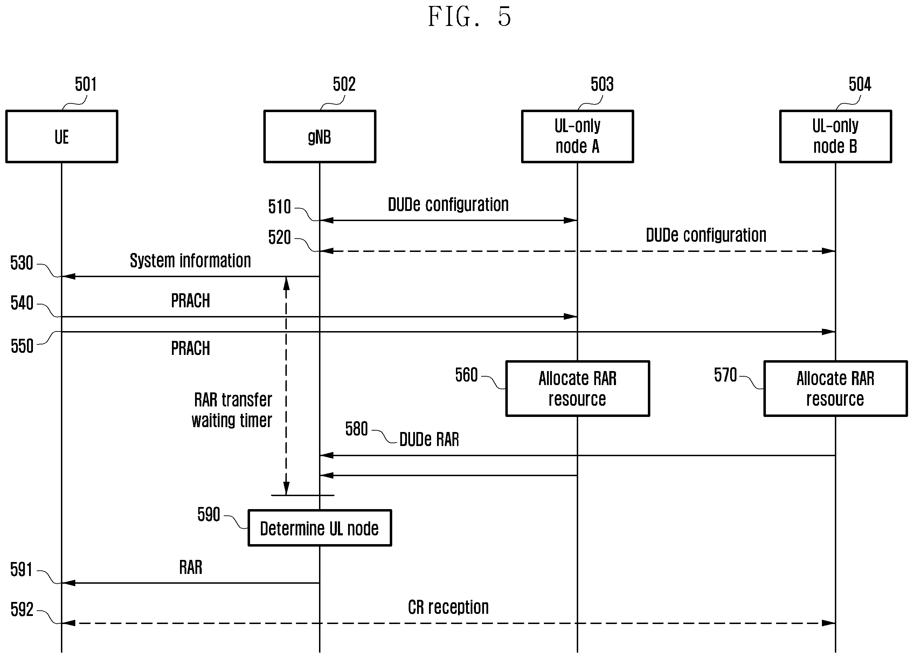

A DUDe node of FIG. 4A may be the gNB or UL nodes illustrated in FIG. 1. The operations of FIG. 5A may be included in the DUDe configuration step of FIG. 1. The operations of FIG. 4A may be performed after XN interface connection is set up through the operations of FIG. 2, or may be performed after identifying that the operations may be configured in advance and that DUDe may be provided to each other.

With reference to FIG. 4A, a gNB 401 may complete XN interface setup with a plurality of UL DUDe nodes 402 and 403. FIG. 4A illustrates an embodiment in which the gNB 401 adds UL nodes sharing the same frequency band to performs DUDe.

According to an embodiment, the gNB 401 may select DUDe for each SSB based on information (e.g., SSB, DUDe frequency band) of a plurality of UL DUDe nodes, and first transmit a DUDe node addition request message to one UL DUDe node 402, including SSB information requiring PRACH occasion allocation, information indicating to share a DUDe band, and a DUDe frequency band to be used (step 410). The DUDe node addition request message may include at least one of SSB information requiring PRACH occasion allocation, an indicator indicating whether a PRACH occasion is shared, a DUDe band list already being used, or a timestamp. The UL node 402 that has received the DUDe node addition request message may configure (or map) a PRACH occasion for the SSB (step 420). When the UL node 402 configures a PRACH occasion, the UL node 402 may transmit a DUDe node addition response message including PRACH occasion configuration information to the gNB 401 (step 430). The DUDe node addition response message may include at least one of PRACH occasion mapping information or a timestamp. The gNB 401 that has received the DUDe node addition response message may transmit a DUDe node addition request message to a plurality of UL DUDe nodes 403 to perform DUDe, including information on the received PRACH occasion resource based on the possibility of DL/UL decoupling and the sharing of the DUDe frequency band, information on an SSB requiring PRACH occasion allocation (step 440), information on a DUDe frequency band to be shared, and information on sharing the DUDe band (step 450). The UL nodes 403 that have received the DUDe node addition request message may configure (or map) an SSB using the same PRACH occasion resource (step 460). When the UL node 403 configures a PRACH occasion, the UL node 403 may transmit a DUDe node addition response message including PRACH occasion configuration information to the gNB 401 (step 470). The gNB that has received the DUDe node addition response message may generate system information reflecting DL/UL decoupling based on the possibility of DL/UL decoupling (step 480). The system information may include an indicator for a plurality of ROs per SSB and common random access information, and the like.

For example, with reference to FIG. 4B, in transmitting downlink in a gNB radio frame, a PRACH occasion may be designated for SSB and system information 1 to N so that the same SSB and system information correspond to different UL nodes. 1 to N may be designated to radio frames 1 to N of a UL node A and radio frames 1 to N of a UL node B. In the case that the UE receives SSBs 1 to N based on the allocated PRACH occasion, the UE may transmit a PRACH to the UL node A and the UL node B using a frequency band of the same PRACH resource.

FIG. 5 is a message flow diagram illustrating a method of performing preamble transmission and RAR reception when performing DL/UL decoupling according to an embodiment of the disclosure.

With reference to FIG. 5, a gNB 502 may perform DUDe configuration step (steps 510 and 520) of FIG. 1 with UL nodes 503 and 504. A UE 501 may receive system information (step 530). In the DUDe configuration step, a RAR transfer waiting timer may be defined. The gNB 502 may determine a UL node among the UL nodes where an RAR has arrived during a waiting timer after SSB transmission. The RAR transfer waiting timer may be configured using a transmitted timestamp when performing a DUDE node addition request during a DUDe configuration. The UE 501 may transmit a preamble using PRACH occasion information received as system information (steps 540 and 550), and the UL nodes 503 and 504 that have received the preamble may perform RAR reception step. The UL nodes 503 and 504 may determine whether a preamble received through the PRACH occasion is a corresponding SSB of which DL node and allocate RAR resources (steps 560 and 570). When the RAR resources are allocated, the UL nodes 503 and 504 may transmit a message (e.g., DUDe RAR message) including RAR information to the gNB 502 (step 580). The DUDe RAR message may include an index indicating an SSB corresponding to the received preamble, reception power of the received preamble, a random access-radio network temporary identifier (RA-RNTI) calculated based on information received from the UE, and medium access control (MAC) RAR information. When the gNB 502 receives a message including RAR information from a plurality of UL nodes 503 and 504, the gNB 502 may select a UL node to perform uplink connection with the UE 501 (step 590), and transmit a msg 2 RAR to the UE 501 based on the RAR of the selected UL node and the calculated RA-RNTI (step 591). For example, the gNB 502 may select a UL node among UL nodes where the RAR has arrived during the waiting timer after SSB transmission. Msg 2 may be a message including a TC-RNTI, a TA command, and the like. Thereafter, the UE 501 and the UL node 504 perform CR reception (step 592).

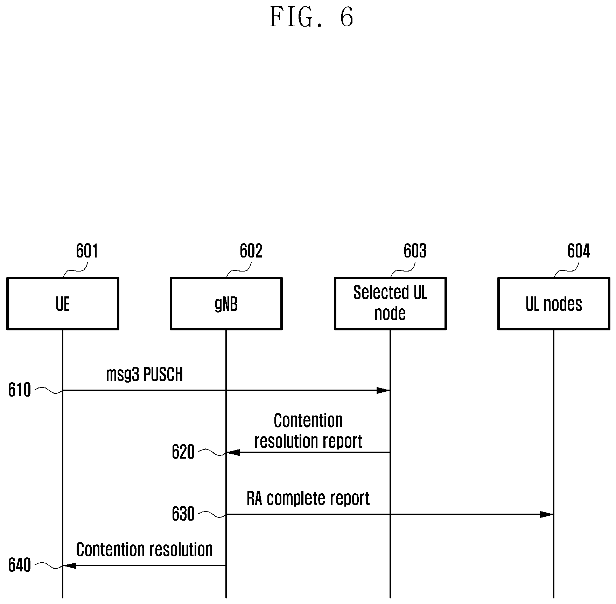

FIG. 6 is a message flow diagram illustrating a method of performing CR reception when performing DL/UL decoupling according to an embodiment of the disclosure.

A selected UL node 603 of FIG. 6 may be a UL node that has transmitted RAR information used for transmitting msg2 determined by the gNB described with reference to FIG. 5. The operations of FIG. 6 may be operations after performing the steps of FIG. 5 when performing DUDe.

With reference to FIG. 6, a UE 601 may perform RAR decoding based on information received in the RAR reception step, identify a node of an RA-RNTI that has succeeded in decoding, and transmit a msg 3 message to the corresponding node (i.e., selected UL node) (step 610). The msg 3 message may include information for performing RRC connection, handover, and the like. When the selected UL node 603 receives msg 3, the UL node 603 may transmit information related to contention resolution to a gNB 602 as a contention resolution report (step 620). The contention resolution report may include information on the content type of msg 3 and a msg content. For example, in the case that the UE 601 transmits a common control channel service data unit (CCCH SDU) as msg 3, the selected UL node may transmit a UE contention resolution identity MAC CE in the contention resolution report. The gNB 602 may transmit a random access (RA) complete report indicating that RA has been completed using another UL node to other UL nodes 604 that are not selected based on the received contention resolution report (step 630). The UL nodes 604 that have received the RA complete report may release the RAR resource allocated in FIG. 5. Further, the gNB 602 may perform contention resolution with the UE 601 based on the received contention resolution report (step 640). For example, in the case that the UE transmits a C-RNTI MAC CE, the gNB 602 may complete RA when receiving a PDCCH through the C-RNTI. In another embodiment, in the case that the UE transmits a CCCH SDU, the gNB 602 may configure a temporary C-RNTI to a C-RNTI when receiving a UE contention resolution identity MAC CE, and complete the RA.

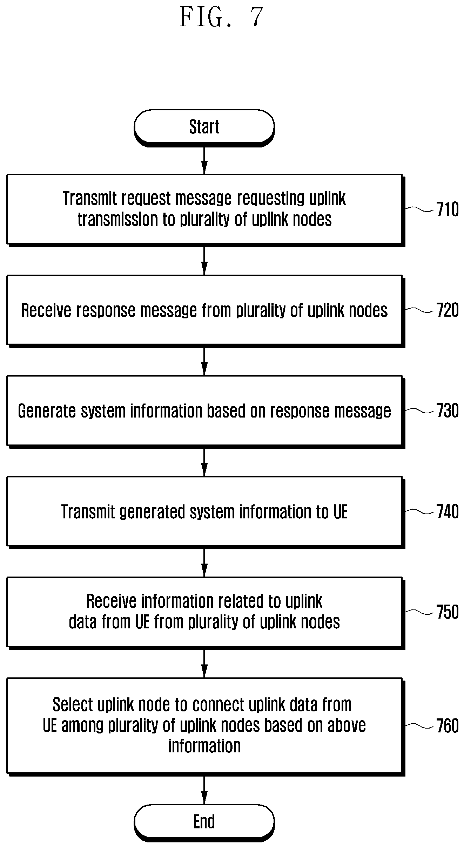

FIG. 7 illustrates a flowchart according to an embodiment of the disclosure. Specifically, FIG. 7 is a flowchart illustrating a method performed by a base station in a wireless communication system. The base station may transmit a request message requesting uplink transmission to a plurality of uplink nodes (step 710). The request message may include at least one of a synchronization signal block (SSB), information indicating whether a decoupling band is shared between the plurality of uplink nodes, or information on a decoupling band already being used by other uplink nodes. The base station may receive a response message from the plurality of uplink nodes in response to the request message (step 720). The response message may include at least one of information on PRACH resources allocated by the plurality of uplink nodes or information on a PRACH occasion configuration. The base station may generate system information based on the response message (step 730), and the base station may transmit the generated system information to a user equipment (UE) (step 740). The base station may receive information related to uplink data from the UE from the plurality of uplink nodes (step 750). The base station may select an uplink node to connect uplink data from the UE among the plurality of uplink nodes based on the above information (step 760).

Furthermore, the base station may transmit a request message for interface connection to the uplink nodes. The request message for the interface connection may further include at least one of information on a downlink/uplink cell provided by the base station, information indicating whether downlink/uplink decoupling (DUDe) is possible, or information on a provided DUDe frequency band. Further, in step 720, the base station may specifically receive a response message for the interface connection from the plurality of uplink nodes. The base station may receive a message including at least one of information on an SSB index corresponding to a preamble received from the UE, reception power of the preamble, a RAPID, a calculated random access-radio network temporary identifier (RA-RNTI), or a MAC RAR from the plurality of uplink nodes.

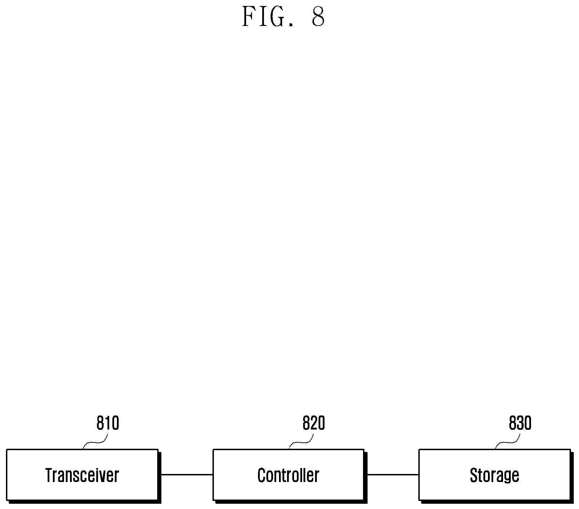

FIG. 8 is a block diagram illustrating a structure of a base station according to an embodiment of the disclosure.

With reference to FIG. 8, the base station may include a transceiver 810, a controller 820, and a storage 820. In the disclosure, the controller may be defined as a circuit, an application specific integrated circuit, or at least one processor.

The transceiver 810 may transmit and receive signals to and from other network nodes. The transceiver 810 may transmit, for example, system information to a UE and transmit a synchronization signal or a reference signal to the UE.

The controller 820 may control the overall operation of the base station according to the embodiment proposed in the disclosure. For example, the controller 820 may control the signal flow between each block in order to perform the operation according to the flowchart described above. Specifically, the controller 820 may control the operation proposed in the disclosure in order to transmit residual system information (RMSI) in a multi-beam-based system according to the embodiment of the disclosure.

The storage 2630 may store at least one of information transmitted and received through the transceiver 810 or information generated through the controller 820.

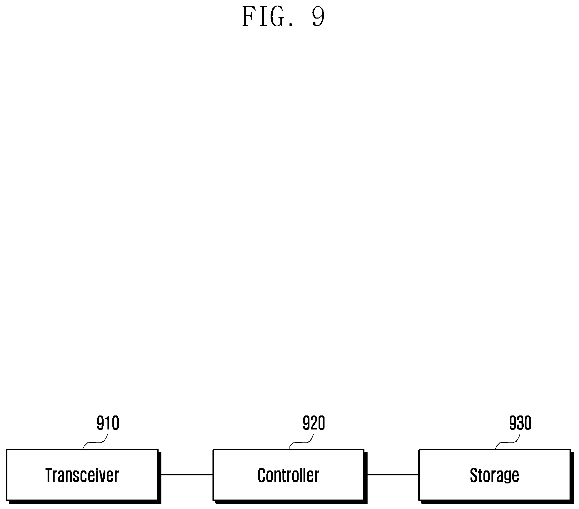

FIG. 9 is a block diagram illustrating a structure of a network node according to an embodiment of the disclosure.

With reference to FIG. 9, the network node may include a transceiver 910, a controller 920, and a storage 930. In the disclosure, the controller may be defined as a circuit, an application specific integrated circuit, or at least one processor.

The transceiver 910 may transmit and receive signals to and from other network entities. The transceiver 2610 may transmit, for example, system information to a UE and transmit a synchronization signal or a reference signal to the UE.

The controller 920 may control the overall operation of the network node according to the embodiment proposed in the disclosure. For example, the controller 920 may control the signal flow between each block in order to perform the operation according to the flowchart described above. Specifically, the controller 920 may control the operation proposed in the disclosure in order to transmit residual system information (RMSI) in the multi-beam-based system according to the embodiment of the disclosure.

The storage 930 may store at least one of information transmitted and received through the transceiver 910 or information generated through the controller 920.

It should be noted that constitution diagrams, diagrams of a control/data signal transmission method, and operation procedure diagrams illustrated above are not intended to limit the scope of the disclosure. That is, all components, entities, or steps of operation described in embodiments of the disclosure should not be interpreted as essential components for implementation of the disclosure, and even through embodiments of the disclosure include only some components, the embodiments of the disclosure may be implemented within the scope that does not impair the essence of the disclosure. Further, the respective embodiments may be operated in combination with each other, as needed. For example, the network entity and the UE may be operated by combining parts of the methods proposed in the disclosure.

The operations of the base station or the UE described above may be realized by providing a memory device storing the corresponding program code in an arbitrary component in the base station or the UE device. That is, a controller of the base station or the UE device may execute the above-described operations by reading and executing the program code stored in the memory device by a processor or a central processer (CPU).

Various components and modules of the entity, base station, or UE device described in this specification may be operated using a hardware circuit such as a combination of a complementary metal oxide semiconductor-based logic circuit, firmware, software, and/or hardware and firmware and/or software inserted into a machine readable medium. For example, various electrical structures and methods may be implemented using electrical circuits such as transistors, logic gates, and application specific integrated circuits.

In the case of being implemented in software, a computer readable storage medium storing one or more programs (software modules) may be provided. One or more programs stored in the computer readable storage medium are configured for execution by one or more processors in an electronic device. The one or more programs include instructions for causing the electronic device to execute methods according to embodiments described in the claims or specifications of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), another form of optical storage device, or a magnetic cassette. Alternatively, the programs may be stored in a memory composed of a combination of some or all thereof. Further, each constitution memory may be included in the plural.

Further, the program may be stored in an attachable storage device that may access through a communication network such as the Internet, Intranet, local area network (LAN), wide LAN (WLAN), or storage area network (SAN), or a communication network composed of a combination thereof. Such a storage device may access a device implementing an embodiment of the disclosure through an external port. Further, a separate storage device on the communication network may access the device implementing the embodiment of the disclosure.

In the above-described specific embodiments of the disclosure, components included in the disclosure have been expressed in the singular or the plural according to the presented specific embodiments. However, the singular or plural expression is appropriately selected for a presented situation for convenience of description, and the disclosure is not limited to the singular or plural components, and even if a component is represented in the plural, it may be composed of the singular, or even if a component is represented in the singular, it may be composed of the plural.

In the detailed description of the disclosure, although specific embodiments have been described, various modifications are possible without departing from the scope of the disclosure. Therefore, the scope of the disclosure should not be limited to the described embodiments and should be defined by the claims described below as well as by those equivalent to the claims. That is, it will be apparent to those of ordinary skill in the art to which the disclosure pertains that other modifications based on the technical spirit of the disclosure may be implemented. Further, the respective embodiments may be operated in combination with each other, as needed. For example, the base station and the UE may be operated by combining parts of the methods proposed in the disclosure. Further, although the above embodiments have been presented based on 5G and NR systems, other modifications based on the technical spirit of the embodiments may be implemented in other systems such as LTE, LTE-A, and LTE-A-Pro systems.

## Claims

1. A method performed by a base station in a wireless communication system, the method comprising:
transmitting, to a plurality of uplink nodes, a request message requesting for an uplink transmission;
receiving, from the plurality of uplink nodes, a response message;
generating system information based on the response message;
transmitting, to a user equipment (UE), the generated system information;
receiving, from the plurality of uplink nodes, information related to uplink data from the UE; and
selecting an uplink node to connect uplink data from the UE among the plurality of uplink nodes based on the information.

2. The method of claim 1, wherein the request message comprises at least one of a synchronization signal block (SSB), information indicating whether a decoupling band is shared between the plurality of uplink nodes, or information on a decoupling band already being used by other uplink nodes, and
wherein the response message comprises at least one of information on a physical random access channel (PRACH) resources allocated by the plurality of uplink nodes or information on a PRACH occasion configuration.

3. The method of claim 1, further comprising:
transmitting, to the plurality of uplink nodes, a request message for an interface connection; and
receiving, from the plurality of uplink nodes, a response message for the interface connection.

4. The method of claim 3,
wherein the request message for the interface connection comprises at least one of information on a downlink/uplink cell provided by the base station, information indicating whether downlink/uplink decoupling (DUDe) is possible, or information on a provided DUDe frequency band, and
wherein the method further comprises receiving, from the plurality of uplink nodes, a message including at least one of information on an SSB index corresponding to a preamble received from the UE, reception power of the preamble, a random access preamble ID (RAPID), a calculated random access-radio network temporary identifier (RA-RNTI), or a medium access control random access response (MAC RAR).

5. A method performed by an uplink node in a wireless communication system, the method comprising:
receiving, from a base station, a request message requesting for an uplink transmission;
transmitting, to the base station, a response message; and
transmitting, to the base station, information related to uplink data from a user equipment (UE),
wherein system information is generated based on the response message and transmitted to the UE, and
an uplink node to connect uplink data from the UE among a plurality of uplink nodes is selected based on the uplink data and information.

6. The method of claim 5, wherein the request message comprises at least one of a synchronization signal block (SSB), information indicating whether a decoupling band is shared between the plurality of uplink nodes, or information on a decoupling band already being used by other uplink nodes, and
wherein the response message comprises at least one of information on a physical random access channel (PRACH) resources allocated by the plurality of uplink nodes or information on a PRACH occasion configuration.

7. The method of claim 5, further comprising:
receiving, from the base station, a request message for an interface connection; and
transmitting, to the base station, a response message for the interface connection.

8. The method of claim 7, wherein the request message for the interface connection comprises at least one of information on a downlink/uplink cell provided by the base station, information indicating whether downlink/uplink decoupling (DUDe) is possible, or information on a provided DUDe frequency band, and
wherein the method further comprises transmitting, to the base station, a message including at least one of information on an SSB index corresponding to a preamble received from the UE, reception power of the preamble, a RAPID, an RA-RNTI, or a MAC RAR.

9. A base station, comprising:
a transceiver capable of transmitting and receiving at least one signal; and
a controller coupled to the transceiver,
wherein the controller is configured to:
transmit, to a plurality of uplink nodes, a request message requesting for an uplink transmission,
receive, from the plurality of uplink nodes, a response message,
generate system information based on the response message,
transmit, to a user equipment (UE), the generated system information,
receive, from the plurality of uplink nodes, information related to uplink data from the UE, and
select an uplink node to connect uplink data from the UE among the plurality of uplink nodes based on the information.

10. The base station of claim 9, wherein the request message comprises at least one of a synchronization signal block (SSB), information indicating whether a decoupling band is shared between the plurality of uplink nodes, or information on a decoupling band already being used by other uplink nodes, and
wherein the response message comprises at least one of information on a physical random access channel (PRACH) resources allocated by the plurality of uplink nodes or information on a PRACH occasion configuration.

11. The base station of claim 9, wherein the controller is further configured to:
transmit, to the plurality of uplink nodes, a request message for an interface connection; and
receive, from the plurality of uplink nodes, a response message for the interface connection.

12. The base station of claim 11, wherein the request message for the interface connection comprises at least one of information on a downlink/uplink cell provided by the base station, information indicating whether downlink/uplink decoupling (DUDe) is possible, or information on a provided DUDe frequency band, and
wherein the controller is further configured to receive, from the plurality of uplink nodes, a message including at least one of information on an SSB index corresponding to a preamble received from the UE, reception power of the preamble, a RAPID, a calculated RA-RNTI, or a MAC RAR.

13. An uplink node, comprising:
a transceiver capable of transmitting and receiving at least one signal;
and
a controller coupled to the transceiver,
wherein the controller is configured to:
receive, from a base station, a request message requesting for an uplink transmission,
transmit, to the base station, a response message, and
transmit, to the base station, information related to uplink data from a user equipment (UE),
wherein system information is generated based on the response message and transmitted to the UE, and
an uplink node to connect uplink data from the UE among a plurality of uplink nodes is selected based on the uplink data and information.

14. The uplink node of claim 13, wherein the request message comprises at least one of a synchronization signal block (SSB), information indicating whether a decoupling band is shared between the plurality of uplink nodes, or information on a decoupling band already being used by other uplink nodes, and
wherein the response message comprises at least one of information on a physical random access channel (PRACH) resources allocated by the plurality of uplink nodes or information on a PRACH occasion configuration.

15. The uplink node of claim 13, wherein the controller is further configured to:
receive, from the base station, a request message for an interface connection, and
transmit, to the base station, a response message for the interface connection,
wherein the request message for the interface connection comprises at least one of information on a downlink/uplink cell provided by the base station, information indicating whether downlink/uplink decoupling (DUDe) is possible, or information on a provided DUDe frequency band.
